# EUROPÄISCHE PATENTANMELDUNG

(11) **EP 2 581 686 A2**
(43) Veröffentlichungstag der Anmeldung: **17.04.2013**
(21) Anmeldenummer: 12186749.3
(22) Anmeldetag: 01.10.2012
(51) Int. Cl.: F24J 2/24, F24J 2/46

(54) **Solarkollektor**

(30) Priorität: 15.10.2011 DE 102011116206
(71) Anmelder: Vaillant GmbH, 42859 Remscheid (DE)
(72) Erfinder: Reinertz, Thomas, 42897 Remscheid (DE); Krämer, Michaela, 42897 Remscheid (DE)
(74) Vertreter: Hocker, Thomas

(57) **Zusammenfassung**

Die Erfindung betrifft einen Solarkollektor mit einem Absorber 2 und einer den Absorber 2 abdeckenden transparenten Abdeckscheibe 1. Der Absorber 2 weist einen Kragen 6 auf, der direkt mit der Abdeckscheibe durch eine Hartlöt- oder Schweißverbindung gasdicht und hochtemperaturbeständig verbunden ist. Der Hohlraum 8 zwischen Absorber 2 und Abdeckscheibe 1 ist mit Inertgas oder Edelgas gefüllt bzw. evakuiert.

## Beschreibung

Die Erfindung betrifft einen Solarkollektor zur Nutzung solarer Wärme für Heizzwecke oder zum Bereiten von warmem Wasser.

Ein gattungsgemäßer Solarkollektor ist aus der Gebrauchsmusterschrift DE 201 03 503 U1 bekannt. Ein Solarkollektor besteht aus einer transparenten Abdeckscheibe, die auf die Sonne ausgerichtet ist, einem dahinter angeordneten Absorber, sowie aus einem Wannenförmigen oder aus mehreren Teilen zusammengesetzten wärmeisolierten Gehäuse. Das Gehäuse dient der Fixierung der einzelnen Bauteile. Die transparente Abdeckscheibe schützt den Absorber vor Verschmutzungen und verhindert den Verlust der vom Absorber absolvierten Wärme. Zur Verbesserung der Wärmedämmung ist es aus der DE 201 03 503 U1 bekannt, den Zwischenraum zwischen Absorber und Abdeckscheibe mit einem Edelgas zu füllen. Damit können Wärmeverluste durch die Abdeckscheibe verringert werden.

Um die Isolierwirkung über mehrere Jahre aufrecht zu halten, muss der mit Edelgas gefüllte Zwischenraum gasdicht gegenüber der Umwelt abgedichtet sein.

Aus dem Fensterbau sind Dichtungstechniken bekannt, die diese Anforderung für Fenster erfüllen. Dies sind Abstandselemente aus Edelstahl oder Aluminium, die mit Trockenmittel gefüllt sind. Um den Abstandshalter zu verkleben, wird Butylklebstoff verwendet, der eine gasdichte Verklebung gewährleistet.

Bei Solarkollektoren kann wegen der hohen Temperatur des Absorbers von mehr als 200 °C kein Butylklebstoff verwendet werden, da dieser den hohen Temperaturen nicht standhält.

Es ist daher Aufgabe der Erfindung, einen Solarkollektor bereitzustellen, bei dem der Zwischenraum zwischen Absorber und Abdeckscheibe mit einem Inertgas oder Edelgas gefüllt oder der evakuiert sein kann, ohne dass innerhalb der Lebensdauer des Solarkollektors ein Gasaustausch mit der Umgebung stattfindet.

Diese Aufgabe wird gemäß den Merkmalen des Anspruchs 1 dadurch gelöst, dass der Absorber direkt mit der Abdeckscheibe verbunden ist. Dadurch ist die Naht zwischen beiden Bauteilen kleiner.

Bevorzugt weist der Absorber einen Kragen auf, mit dem die Abdeckung verbunden ist. Durch den hervorstehenden Kragen wird ein Abstand zwischen dem mittleren Bereich des Absorbers und der Abdeckung gewährleistet.

In einer Variante der Erfindung ist der Absorber tiefgezogen, um den Kragen herzustellen.

In einer anderen Variante der Erfindung ist aus einem Blechmaterial zu einem Kasten mit umlaufenden Rand geformt, der an den Ecken geschweißt ist.

Bei einer vorteilhaften Ausführungsform sind der Absorber und die Abdeckscheibe durch Hartlöten oder Schweißen, bevorzugt durch Ultraschallschweißen gasdicht miteinander verbunden. Dabei können der Absorber oder die Abdeckscheibe entweder direkt miteinander verbunden sein oder über eine Zwischenlage, beispielsweise aus Metall oder Keramik, die sich besonders vorteilhaft Hartlöten oder Schweißen lässt.

In einer alternativen Ausführungsform ist der Absorber mit dem Abdeckglas mittels einer Silikon-Klebefuge abdichtend verbunden. Durch eine geringe Dicke von unter 1 mm und einer Breite von über 10 mm der Silikonnaht wird eine hohe Gasdichtigkeit erreicht, da der Querschnitt gering und die von den Gasmolekülen zu durchdringende Länge groß ist.

In einer Ausführungsvariante ist der Hohlraum zwischen Absorber und Abdeckscheibe mit einem Inertgas, vorzugsweise mit einem Edelgas und besonders bevorzugt mit Argon oder Krypton gefüllt. Dies verbessert die Isolierwirkung.

In einer alternativen Ausführungsvariante ist der Hohlraum zwischen Absorber und Abdeckscheibe mit Unterdruck oder einem Vakuum bzw. einem dem Vakuum nahen Unterdruck beaufschlagt. Dies verringert den Wärmetransport durch Konvektion vom Absorber 2 zur Abdeckscheibe 1.

Die Erfindung wird nun anhand der Figur detailliert erläutert.

Es stellen dar:
- Figur 1:: Eine Schnittdarstellung des erfindungsgemäßen Solarkollektors
- Figur 2:: eine Detaildarstellung des Absorbers
- Figur 3:: eine Detaildarstellung einer Variante des Absorbers

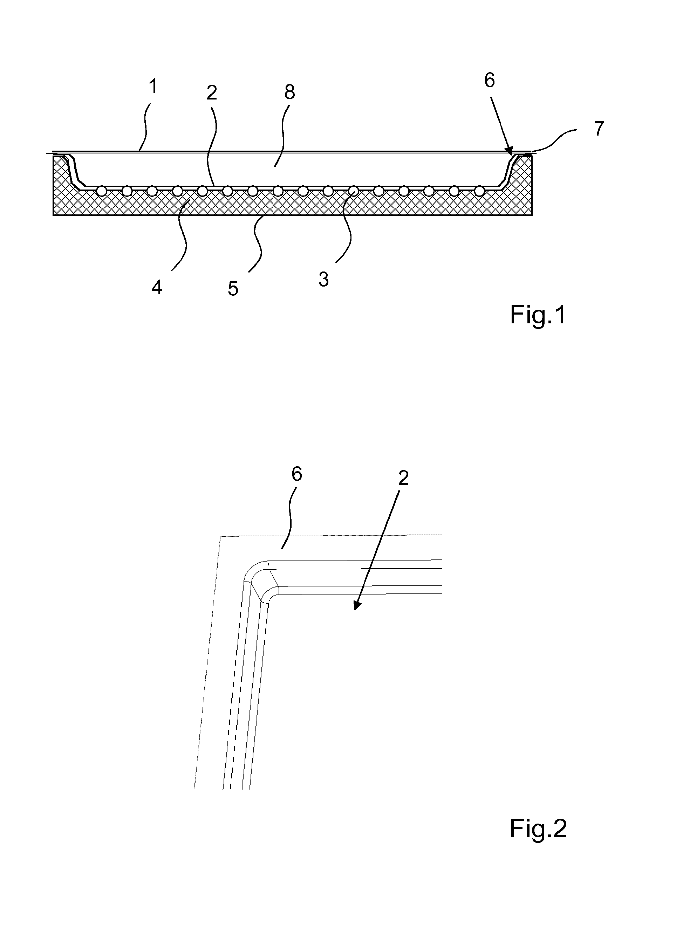

Figur 1 zeigt eine Schnittdarstellung des erfindungsgemäßen Solarkollektors. Der Solarkollektor besteht aus einem Absorber 2, der durch Sonneneinstrahlung erwärmt wird. Die Wärme wird über Leitungen 3, die von einem Wärmeträgermedium durchströmt werden, zu einer hier nicht dargestellten Wärmesenke, wo die Wärme als Nutzwärme verwendet wird, abgeführt. Um den Wärmeverlust zu minimieren, ist der Absorber rückseitig mittels einer Isolierung 4 isoliert. Auf der Oberseite ist der Absorber 2 von einer Abdeckscheibe 1 abgedeckt. Diese dient ebenfalls der Isolation. Um die Isolationswirkung der Abdeckscheibe 1 zu verbessern, ist zwischen Absorber 2 und Abdeckscheibe 1 ein Hohlraum 8 vorgesehen, der mit einem Inertgas oder Edelgas wie beispielsweise Argon gefüllt ist. Alternativ kann auch ein vakuumnaher Unterdruck oder ein Vakuum in dem Hohlraum 8 herrschen.

Der Hohlraum 8 ist gasdicht gegenüber der Umgebung abgedichtet. Zudem ist die Abdichtung auch bei hohen Temperaturen, wie sie im Falle einer Stagnation des Solarkollektors auftreten, beständig. Dazu ist erfindungsgemäß der Randbereich des Absorbers 2 in Form eines Kragens 6 ausgeführt, so dass die Abdeckscheibe 1 direkt mit dem Absorber 2 verbunden ist. Die Verbindung 7 erfolgt erfindungsgemäß durch eine Hartlötverbindung oder Schweißverbindung, bevorzugt durch eine Ultraschallschweißverbindung. Derartige Verbindungen zwischen Metall und Glas sind prozesssicher beherrschbar. Erfindungsgemäß eingeschlossen ist eine Hartlötverbindung oder Schweißverbindung unter Verwendung einer zwischen die Abdeckscheibe 1 und den Absorber 2 gelegten Zwischenlage aus einem Material, das zu der Abdeckscheibe 1 bzw. zu dem Absorber 2 besonders gute Löt- oder Schweißeigenschaften aufweist.

Alternativ kann die Verbindung 7 auch abdichtendend mit einer Silikon-Klebenaht ausgeführt sein. Um eine ausreichende Gasdichtigkeit herzustellen, wird dem diffundierende Gas eine geringe Querschnittsfläche und eine lange Strecke, durch die das Gas diffundieren muss, entgegengestellt. Dies wird durch eine Klebefuge bzw. Klebenaht erreicht, die unter 1 mm dick ist und über 10 mm breit ist.

Figur 2 zeigt die Darstellung einer Ecke einer Ausführungsform des Absorbers 2. Der Absorber wird durch ein Tiefziehverfahren aus einem ebenen Blech hergestellt. Dabei bildet sich ein Kragen 6.

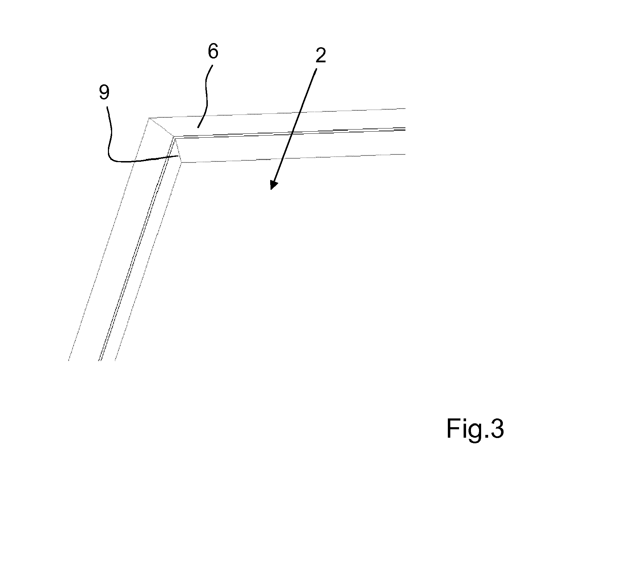

Figur 3 zeigt die gleiche Ansicht einer anderen Ausführungsform des Absorbers 2. Hier werden aus einem ebenen Blech die Ecken herausgeschnitten und durch Abkanten wird das ebene Blech in die in Figur 3 dargestellte Form mit einem Kragen 6 gebracht. Anschließend werden die Nähte mit einer Schweißnaht 9 versehen, um die Stabilität und Gasdichtigkeit herzustellen.

### Bezugszeichenliste

- 1: Abdeckscheibe
- 2: Absorber
- 3: Leitung
- 4: Isolierung
- 5: Gehäuse
- 6: Kragen
- 7: Verbindung
- 8: Hohlraum
- 9: Schweißnaht

## Patentansprüche

1. Solarkollektor mit einem Absorber (2) und einer den Absorber (2) abdeckenden transparenten Abdeckscheibe (1), wobei zwischen Absorber (2) und Abdeckscheibe (1) ein gegenüber der Umgebung abgedichteter Hohlraum (8) gebildet wird, **dadurch gekennzeichnet, dass** der Absorber (2) direkt mit der Abdeckscheibe (1) verbunden ist.

2. Solarkollektor nach Anspruch 1, **dadurch gekennzeichnet, dass** der Absorber (2) einen Kragen (6) aufweist, mit dem die die Abdeckscheibe (1) verbunden ist.

3. Solarkollektor nach Anspruch 2, **dadurch gekennzeichnet, dass** der Absorber (2) tiefgezogen ist.

4. Solarkollektor nach Anspruch 2, **dadurch gekennzeichnet, dass** der Absorber (2) zu einem Kasten mit umlaufenden Rand gebogen und an den Ecken geschweißt ist.

5. Solarkollektor nach einem der vorhergehenden Ansprüche, **dadurch gekennzeichnet, dass** der Absorber (2) durch eine Schweiß- oder Hartlötverbindung, insbesondere durch eine Ultraschallschweißverbindung mit dem Abdeckglas (1) abdichtend verbunden ist

6. Solarkollektor nach einem der Ansprüche 1 bis 4, **dadurch gekennzeichnet, dass** der Absorber (2) mit dem Abdeckglas (1) mittels einer Silikon-Klebefuge abdichtend verbunden ist und dass die Klebefuge eine Dicke von unter 1 mm und eine Breite von über 10 mm aufweist.

7. Solarkollektor nach einem der vorhergehenden Ansprüche, **dadurch gekennzeichnet, dass** der Hohlraum (8) mit einem Inertgas, vorzugsweise mit einem Edelgas, besonders bevorzugt mit Argon oder Krypton gefüllt ist.

8. Solarkollektor nach einem der vorhergehenden Ansprüche, **dadurch gekennzeichnet, dass** im Hohlraum (8) ein Unterdruck, vorzugsweise ein vakuumnaher Unterdruck oder Vakuum herrscht.
